# EUROPEAN PATENT SPECIFICATION

(11) **EP 3 681 666 B1**
(45) Date of publication and mention of the grant of the patent: **11.08.2021**
(21) Application number: 18786028.3
(22) Date of filing: 11.09.2018
(51) Int. Cl.: B23K 26/00, B23K 26/14, B23K 26/082, B23K 26/352

(54) **METHOD AND APPARATUS FOR DEEP MARKING METALLIC MATERIALS WITH A MOVABLE NOZZLE FOR THE EMISSION OF GAS**
VERFAHREN UND VORRICHTUNG ZUM TIEFMARKIEREN VON METALLISCHEN WERKSTOFFEN MIT EINER BEWEGLICHEN DÜSE ZUR EMISSION VON GAS
PROCÉDÉ ET APPAREIL DE MARQUAGE PROFOND DE MATÉRIAUX MÉTALLIQUES AU MOYEN D'UNE BUSE MOBILE DESTINÉE À L'ÉMISSION DE GAZ

(30) Priority: 15.09.2017 IT 201700103664
(43) Date of publication of application: 22.07.2020
(73) Proprietor: M-Pix Srl, 21013 Gallarate (VA) (IT)
(72) Inventor: CUCCHI, Maurizio, 21038 Leggiuno Varese (IT)
(74) Representative: Serravalle, Marco
(86) International application number: PCT/IB2018/001081
(87) International publication number: WO 2019/053504

(56) References cited:
- WO-A1-98/02272
- JP-A- 2002 292 484
- US-A1- 2003 146 198

## Description

**.** The present invention is directed to an apparatus for deep marking of solid materials according to the preamble of claim 1 (see for example JP 2002/292484 A), and to a method of deep marking metallic materials by the use of said apparatus, see claim 7.

**.** Marking of materials is one of the most prominent field of use of laser resonators. By marking it is possible to add to a product a serial number, expiry or production date, bar codes, alphanumeric codes, etc..

**.** Marking can be performed by several methods, such as blackening, decolorizing or changing of color of a material, physical modification of the superficial finish of the material, controlled modification of the material surface by melting, or creation of a groove on the material surface. The present invention concerns the latter method, i.e. the use of a laser resonator for creating a groove deep enough to guarantee reading of the marking even after painting or, in any case, covering of the treated surface by a siding or coating, or a deep groove which is not conveniently obtained by other laser applications.

**.** Marking can be operated on any material presenting a solid/liquid/vapor transition, necessary for punctual fusion/vaporization of the material under the effect of the laser beam. In a preferred embodiment, materials used in the present invention are metallic materials, i.e. metals or metal alloys.

**.** Although, as above stated, laser resonators find widespread use in the field of marking, deep marking is usually performed by using mechanical marking means, since in this case laser marking tends to be no longer visible after coating or after other superficial finish. In fact, molten metal does not vaporize by laser beam, and if it is not removed, solidifies again; thus, marking takes place by change of color or by a variation of the superficial state.

**.** In the past, laser resonators have been developed which were able to deep mark thanks to the presence of a gas flux coaxial with the laser beam. In this way the material, once molten, is removed by the gas flux and a more or less deep groove is formed in the sheet of material.

**.** The limit of this technology is that the use of a gas flux coaxial with the laser beam makes it impossible the use of a scan head laser. A scan head laser is constituted by a fixed scan head, wherein the movement of the laser beam is obtained by a system of mirrors which is placed within the head. The absence of movement of the head results in a high speed of movement of the laser beam, and, consequently, much higher production rates. Thus, the use of a scan head laser would render deep laser marking cheaper when compared to conventional deep marking methods (e.g. hemming, mill finishing, abrasion marking).

**.** The present invention is directed to a laser resonator comprising a scan head and capable of producing a deep marking on a material to be marked. Thus, the marking process according to the present invention makes use of a fixed head laser and a fixed, preferably plane, sheet. The movement of the laser beam is obtained by the use of a scan head.

**.** In particular, the present invention is directed to an apparatus for deep marking of solid material as defined in claim 1.

**.** In this way, it is possible to limit the movement of the nozzle to only one of the two directions of movement of the laser beam, making it possible for the nozzle to follow the laser beam, still allowing the scan head laser to work at the maximum speed.

**.** In particular, the size of deep marking accordingly to the invention, can vary in a very wide range, for example, in y direction (breadth), marking can have a size comprised between 5 mm and up to 100 mm. Preferably, the minimum size is of at least 10 mm, more preferably of at least 15 mm or at least 20 mm. The maximum size is preferably not larger than 60 mm, more preferably not larger than 50 mm or not larger than 40 mm. The length of marking (x direction) can as well vary within a broad range, in particular, the minimum length is normally of at least 10 mm, preferably at least 30 mm, more preferably at least 50 mm. The maximum length is preferably not more than 500 mm, more preferably not more than 300 mm.

**.** Concerning depth of marking, i.e. the depth of material removed by the laser beam, it can vary between 0.1 mm and 1.2 mm.

**.** The maximum breadth of marking influences the size of the longer side of the nozzle to be used in combination with the scan head laser, while the length of marking influences the focal distance, thus the distance between the scan head laser and the sheet to be marked.

**.** In a preferred embodiment, the distance between the head of the laser and the sheet is preferably comprised between 50 and 600 mm, more preferably between 100 and 500 mm, depending on the size of the marking to be performed.

**.** Concerning the gas used for removing molten material, it is possible to use all gasses commonly used for this purpose, such as air, nitrogen, noble gasses (neon, argon and helium). For economic reasons, it is normally used air as the gas.

**.** Gas pressure depends on the size of the nozzle and has to guarantee a speed of exit from the nozzle sufficient to remove molten material. Normally, a pressure of at least 3 bar, preferably of at least 4 bar, allows the achievement of the desired result.

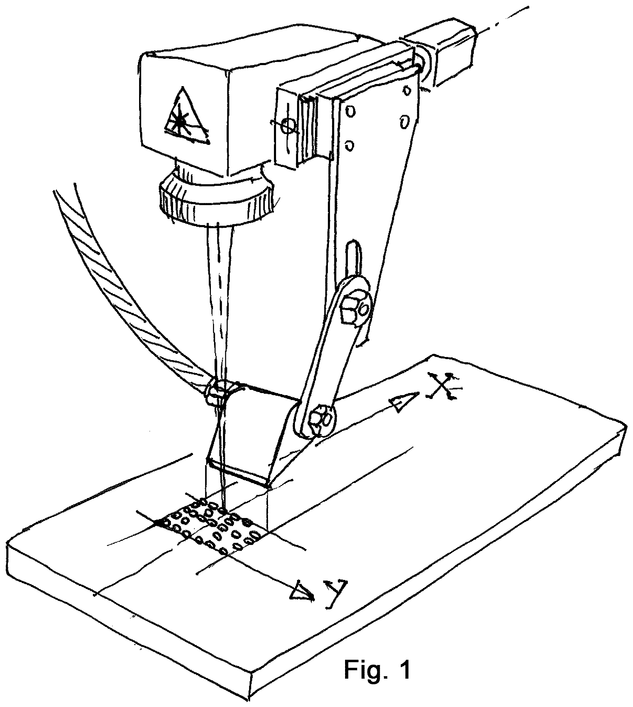

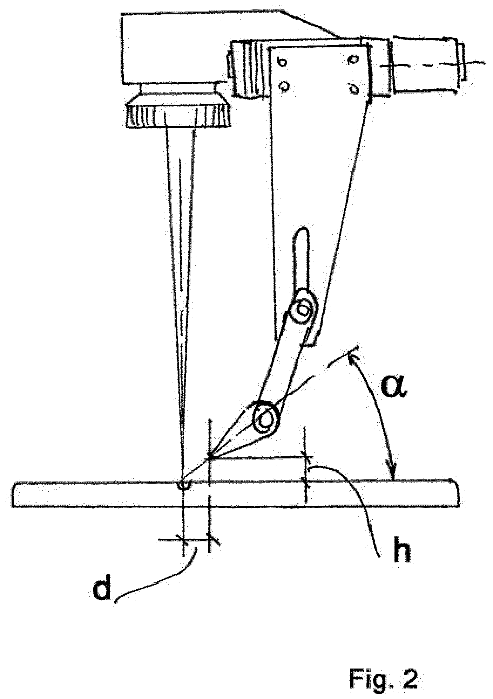

**.** Figure 1 shows a perspective view of the laser according to the invention, wherein X and Y are the axes along which the laser beam moves. As shown in fig. 1, the breadth of the nozzle is such as to cover the entire breadth of marking. Thus, as above defined for the size of marking in y direction, the size of the longer side of the nozzle is comprised between 10 mm and up to 100 mm, preferably the minimum size is of at least 15 mm, or at least 20 mm. The maximum size is preferably not larger than 60 mm, more preferably not larger than 50 mm or not larger than 40 mm.

**.** Fig, 2 shows a lateral view of the laser according to the invention. With d it is indicated the distance along x axis between laser beam and nozzle, with h the distance between the plane of the solid material and the nozzle, while α indicates the incline of the nozzle with respect to the plane of the solid material.

**.** The nozzle has an incline α with respect the plane of the sheet so that the flux be incident to the marking. However, the value of the incline α can vary in a very broad range for example comprised between 10° and 70°, more preferably between 10° and 50°, even more preferably between 15° and 45°. In a preferred embodiment, α is comprised between about 15° and 30°.

**.** The distance d of the nozzle from the laser beam can vary depending on different factors, amongst which the height h of the nozzle from the plane of the sheet, the incline α of the nozzle and the speed of gas exiting the nozzle. Preferably distance d is comprised between 1 mm and 50 mm, more preferably between 2 mm and 30 mm, or between 3 mm and 20 mm. Distance d is maintained within the desired range by synchronizing the movement of the engine connected to the nozzle with the movement of the mirror within the head of the scan laser which causes the movement of the laser beam in x direction. However, it is important to note that the movement of the laser beam is much quicker than the movement of the nozzle, and it is possible for the laser beam to move backwards during incision of letters or numbers. In this case, the movement of the nozzle will be about equal to the "average" movement of the nozzle, and consequently the distance of the nozzle will vary of a few millimeters when compared to the predetermined average distance.

**.** Concerning height h of the nozzle from the plane of the metallic material, it is preferably comprised between a minimum of 1 mm and a maximum of 50 mm. If the height is lower than 1 mm, there is the risks of bearing phenomena between sheet and nozzle, which can damage the precision of the mechanism. If the height is higher than 50 mm the flux of gas might be too far from the molten material and, as a consequence, the apparatus becomes less effective. When the nozzle has an incline α comprised between 30° and 60°, a preferred distance from the plane of the sheet is comprised between 2 mm and 10 mm.

**.** Concerning the laser used in the present invention, it is not particularly limited, and in general any type of laser capable of melting the material to be marked can be used, Examples of lasers particularly useful in the present invention are pulsed lasers, having a duration of the pulse comprised between 0.01 ms and 100 ms, preferably between 0.05 ms and 50 ms, even more preferably between 0.1 ms and 20 ms. The energy of each individual pulse is preferably higher than 0.1 J, more preferably comprised between 0.1 and 30 J. The average of the laser can also vary in a wide range and is preferably comprised between 20 and 1000 W. Concerning wavelength of the laser beam, it can vary in a broad range and it is preferably comprised between 0.8 µm and 11 µm, or between 1 µm and 10 µm.

## Claims

1. Apparatus for deep marking of solid materials, which apparatus comprises:
a. a scan head laser constructed to move a laser beam along x and y axes;
b. a nozzle for the emission of a gas, wherein the nozzle has a rectangular section having a longer side;
and being **characterised by**:
c. an engine connected with the nozzle, which engine is capable of moving the nozzle along the x axis synchronously with the movement of the laser beam, wherein the longer side of the rectangle entirely covers the breadth of the marking along y axis and has a size comprised between 10 and 100 mm.

2. Apparatus according to claim 1, wherein the distance d between laser beam and nozzle is comprised between 1 mm and 50 mm.

3. Apparatus according to claims 1-2, wherein the nozzle is inclined with respect to the plane of the solid material of an angle α comprised between 10° and 70°.

4. Apparatus according to claims 1-3, wherein the pressure of the gas upstream the nozzle is equal to or higher than 3 bar.

5. Apparatus according to claims 1-4, wherein the laser is a pulsed laser, having a wavelength comprised between 0.8 and 11 µm.

6. Apparatus according to claim 5, wherein the duration of the pulse is comprised between 0.01 and 100 ms, and the energy of each pulse is comprised between 0.1 and 30 J.

7. Process for deep marking a material, **characterized by** the use of an apparatus according to claims 1-6.

8. Process according to claim 7, wherein the marking obtained on the material has a breadth comprised between 5 mm and 100 mm and a length comprised between 10 mm and 500 mm.

9. Process according to claim 8, wherein the solid material is a sheet.

10. Process according to claim 9, wherein the sheet is a plane sheet.

11. Process according to claims 7-10, wherein the mark has a depth comprised between 0.1 mm and 1.2 mm.

12. Process according to claims 7-9, wherein the material is a metallic material.

## Patentansprüche

1. Vorrichtung zur Tiefenmarkierung von festen Materialien, wobei die Vorrichtung umfasst:
a. einen Laserscankopf, der zur Bewegung eines Laserstrahls entlang einer x- und einer y-Achse ausgebildet ist;
b. eine Düse zur Ausgabe eines Gases, wobei die Düse einen rechteckigen Querschnitt mit einer längeren Seite aufweist;
und **gekennzeichnet ist durch**:
c. einen mit der Düse verbundenen Motor, wobei der Motor geeignet ist, die Düse entlang der x-Achse synchron mit der Bewegung des Laserstrahls zu bewegen, wobei die längere Seite des Rechtecks die Breite der Markierung entlang der y-Achse vollständig abdeckt und eine Größe zwischen 10 und 100 mm aufweist.

2. Vorrichtung nach Anspruch 1, wobei der Abstand d zwischen Laserstrahl und Düse zwischen 1 mm und 50 mm liegt.

3. Vorrichtung nach Anspruch 1 bis 2, wobei die Düse in Bezug auf die Ebene des festen Materials um einen Winkel α zwischen 10° und 70° geneigt ist.

4. Vorrichtung nach Anspruch 1-3, wobei der Druck des Gases stromaufwärts der Düse gleich oder höher als 3 bar ist.

5. Vorrichtung nach einem der Ansprüche 1 bis 4, wobei der Laser ein gepulster Laser mit einer Wellenlänge zwischen 0,8 und 11 µm ist.

6. Vorrichtung nach Anspruch 5, wobei die Pulsdauer zwischen 0,01 und 100 ms liegt und die Energie jedes Pulses zwischen 0,1 und 30 J liegt.

7. Verfahren zur Tiefenmarkierung eines Materials, **gekennzeichnet durch** die Verwendung einer Vorrichtung nach einem der Ansprüche 1-6.

8. Verfahren nach Anspruch 7, wobei die auf dem Material erhaltene Markierung eine Breite zwischen 5 mm und 100 mm und eine Länge zwischen 10 mm und 500 mm aufweist.

9. Verfahren nach Anspruch 8, wobei das feste Material eine Platte ist.

10. Verfahren nach Anspruch 9, wobei die Platte eine ebene Platte ist.

11. Verfahren nach den Ansprüchen 7-10, wobei die Markierung eine Tiefe zwischen 0,1 mm und 1,2 mm aufweist.

12. Verfahren nach einem der Ansprüche 7-9, wobei das Material ein metallisches Material ist.

## Revendications

1. Appareil de marquage profond de matériaux solides, lequel appareil comprend :
a. un laser à tête de balayage conçu pour déplacer un faisceau laser le long des axes x et y ;
b. une buse destinée à l'émission d'un gaz, la buse ayant une section rectangulaire ayant un côté plus long ;
et étant **caractérisé par** :
c. un moteur relié à la buse, lequel moteur est capable de déplacer la buse le long de l'axe x de manière synchrone avec le mouvement du faisceau laser, le côté le plus long du rectangle recouvrant entièrement la largeur du marquage le long de l'axe y et ayant une taille comprise entre 10 et 100 mm.

2. Appareil selon la revendication 1, dans lequel la distance d entre le faisceau laser et la buse est comprise entre 1 mm et 50 mm.

3. Appareil selon les revendications 1 et 2, dans lequel la buse est inclinée par rapport au plan du matériau solide d'un angle α compris entre 10° et 70°.

4. Appareil selon les revendications 1 à 3, dans lequel la pression du gaz en amont de la buse est égale ou supérieure à 3 bars.

5. Appareil selon les revendications 1 à 4, dans lequel le laser est un laser pulsé, ayant une longueur d'onde comprise entre 0,8 et 11 µm.

6. Appareil selon la revendication 5, dans lequel la durée de l'impulsion est comprise entre 0,01 et 100 ms, et l'énergie de chaque impulsion est comprise entre 0,1 et 30 J.

7. Procédé de marquage profond d'un matériau, **caractérisé par** l'utilisation d'un appareil selon les revendications 1 à 6.

8. Procédé selon la revendication 7, dans lequel le marquage obtenu sur le matériau a une largeur compris entre 5 mm et 100 mm et une longueur comprise entre 10 mm et 500 mm.

9. Procédé selon la revendication 8, dans lequel le matériau solide est une feuille.

10. Procédé selon la revendication 9, dans lequel la feuille est une feuille plane.

11. Procédé selon les revendications 7 à 10, dans lequel la marque a une profondeur comprise entre 0,1 mm et 1,2 mm.

12. Procédé selon les revendications 7 à 9, dans lequel le matériau est un matériau métallique.
